Europäisches Patentamt

European Patent Office

Office européen des brevets

(19)

(11) Veröffentlichungsnummer: **0 272 495**
**B1**

(12) **EUROPÄISCHE PATENTSCHRIFT**

(45) Veröffentlichungstag der Patentschrift:
**08.08.90**

(21) Anmeldenummer: **87117536.0**

(22) Anmeldetag: **24.11.87**

(51) Int. Cl.⁵: **F16B 39/34**

(54) Schraubelement mit einem Sicherungs- und Dichtring aus Kunststoff.

(30) Priorität: **25.11.86 DE 3640225**

(43) Veröffentlichungstag der Anmeldung:
**29.06.88 Patentblatt 88/26**

(45) Bekanntmachung des Hinweises auf die Patenterteilung:
**08.08.90 Patentblatt 90/32**

(84) Benannte Vertragsstaaten:
**DE ES FR GB IT SE**

(56) Entgegenhaltungen:
**EP-A- 0 047 061**
**DE-B- 1 284 170**
**DE-U- 1 815 585**
**DE-U- 1 998 762**
**DE-U- 7 221 526**
**GB-A- 1 291 121**
**US-A- 3 572 414**
**US-A- 4 019 550**
**US-A- 4 126 170**
**US-A- 4 367 060**

(73) Patentinhaber: **Böllhoff & Co, GmbH & Co KG,**
**Archimedesstrasse 1-4, D-4800 Bielefeld 14(DE)**

(72) Erfinder: **Kobusch, Klaus, Torfstichweg 8,**
**D-4800 Bielefeld 1(DE)**

(74) Vertreter: **Dipl.-Ing. H. Hauck Dipl.-Phys. W. Schmitz**
**Dipl.-Ing. E. Graalfs Dipl.-Ing. W. Wehnert Dr.-Ing. W.**
**Döring, Mozartstrasse 23, D-8000 München 2(DE)**

## Beschreibung

Die Erfindung betrifft ein Schraubelement mit einer Gewindebohrung und mit einem Sicherungs- und Dichtring aus Kunststoff gemäß dem Oberbegriff des Patentanspruchs 1.

Es sind zahlreiche Verbindungsarten bekannt, um einen Kunststoffring an einem Schraubelement, insbesondere einer Schraubenmutter aus Metall zu befestigen. So ist es beispielsweise bekannt (US-A 4 019 550, 4 126 170) an der Mutter einen Steg anzuformen, den Kunststoffring innerhalb des Steges einzulegen und den oberen Rand des Steges umzubördeln. Beim Aufschrauben stellt sich eine hohe Flächenpressung des umgebördelten Bereiches ein, da diese Ringfläche eine im wesentlichen nur linienhafte Kontaktfläche erlaubt. Dabei ergeben sich starke Setzerscheinungen der unter Vorspannung befindlichen Schrauben-Muttern-Paarung.

Es ist auch bekannt (DE-A 1 815 585), die Berührfläche des in eine konzentrische Ausnehmung der Schraubenmutter eingelegten Kunststoffrings durch örtliche Erwärmung der Mutter aufzuschmelzen und dann durch Aufbringen von Druck zu befestigen. Es ist aber auch bekannt, Kunststoffringe durch Vulkanisation oder mit Hilfe von Klebstoffen an dem metallischen Schraubelement zu befestigen. Hierzu sind Anlagen zum Vulkanisieren bzw. zum Aufbringen von Klebstoff erforderlich, die eine ständige Umweltbelastung darstellen, stark verschmutzen, einen erheblichen Wartungsaufwand benötigen und für die wirtschaftliche Massenfertigung wenig geeignet sind.

Die der Erfindung zugrundeliegende Aufgabe besteht darin, die Befestigung mit sehr einfachen Mitteln vorzunehmen und eine zuverlässige Haftung und Befestigung zwischen Werkstoffen unterschiedlichster Art und auch für galvanisch behandelte Schraubelemente zu vermitteln.

Die genannte Aufgabe ist erfindungsgemäß durch die Merkmale im Kennzeichen des Patentanspruchs 1 gelöst. Vorteilhafte Weiterbildungen ergeben sich aus den Unteransprüchen. Ein Patentanspruch ist auch auf das Verfahren zur Verbindung des Kunststoffringes mit dem Schraubelement gerichtet.

Der erfindungsgemäße Fügevorgang führt zu einer sehr hohen Haftung des Kunststoffringes, auch bei galvanischer Nachbehandlung, z.B. Verzinken des Schraubelementes. Durch das rein mechanische Verpressen ist die Fertigung solcher Schraubelemente sehr einfach und umweltfreundlich. Schließlich weist die Auflagefläche eine große Kontaktfläche auf, so daß die Flächenpressung stark vermindert ist.

Ein Ausführungsbeispiel der Erfindung ist nachstehend anhand der Zeichnung näher erläutert. Es zeigt:

Figuren 1 bis 3 einen Teilschnitt durch eine Mutter mit Kunststoffring und Befestigungswerkzeug,
Figur 4 eine Schrägansicht der Mutter mit einem Teilschnitt.

Der beispielsweise als Sechskantmutter ausgebildete Grundkörper 1 ist auf der Seite seiner Auflagefläche 2 mit einem Flansch 3 versehen, dessen Durchmesser größer als der größte Durchmesser des Grundkörpers ist. In der Auflagefläche 2 ist eine zur Mutterbohrung 4 konzentrische zylindrische Einsenkung 5 vorgesehen, die zur Aufnahme eines aus thermoplastischem Kunststoff bestehenden Dicht- und Sicherungsringes 6 dient.

Die Abmessungen sind so gewählt, daß vor dem Montagevorgang der Kunststoffring problemlos in die Einsenkung eingelegt werden kann.

An der späteren Anschraubfläche 2 ist an die Einsenkung angrenzend ein erhabener ringförmiger Ansatz 7 angeformt, der die zu verschiebende Materialmenge darstellt, die benötigt wird, um den Ring 6 in der Einsenkung 5 zu halten.

Der obere Abschnitt des Ringes 6, der zum Teil über die Anschraubfläche 2 übersteht, weist einen kegelstumpfförmigen Abschnitt 8 auf. Dadurch ergibt sich ein freier Ringraum 9 zwischen dem Ring 6 und dem Ansatz 7, in den bei der Montage des Ringes 6 die zu verschiebende Metallmenge verdrängt wird.

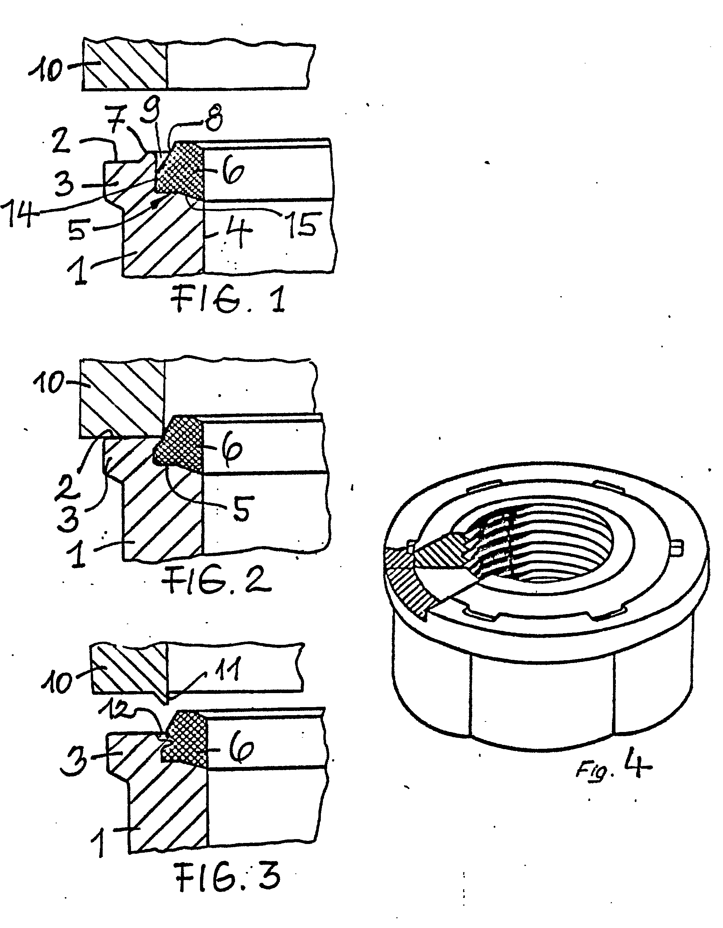

Der Fügevorgang kann durch axiales Pressen erfolgen. Es ist ein gehärteter und plangeschliffener Ringstempel 10 vorgesehen, der axial verschoben wird und dabei die überstehende Materialmenge des Ansatzes 7 frei formend verschiebt. Dabei wird das Material stets nach innen in den Ringraum 9 verdrängt, da hier der geringste Widerstand herrscht. Dieser Vorgang ist in Figur 2 dargestellt und ergibt eine völlig ebene Fläche 2.

Um den Ring 6 drehfest an der Mutter zu halten, um das Gewindeschneiden zu ermöglichen, weist der Ringstempel 10 in Umfangsabständen Nasen 11 auf, die an diesen Stellen entsprechende Einsenkungen 12 vornehmen und dabei die Außenkontur des Ringes abscheren. Die Einsenkungen 12 bilden radiale Nuten, in welche beim Aufschrauben der Mutter ausweichend überschüssiger Kunststoff des Ringes 6 eintreten kann.

Wie aus der Zeichnung ersichtlich ist, wird die Einsenkung 5 von einer zylindrischen Mantelfläche 14 und einem kreisringförmigen Boden bestimmt, der in einem an die Bohrung 4 angrenzenden Bereich 15 zur Bohrung 4 zu konisch verläuft. Damit besteht der Ring 6 im wesentlichen aus einem kreisringförmigen Teil und dem kegelstumpfförmigen Teil 8, dessen Querschnitt so bemessen ist, daß die zu verdrängende Materialmenge des Ansatzes 7 den Ringraum ausfüllt und sich gemäß Figur 2 eine ebene Anschraubfläche 2 ergibt. Durch den konischen Ringabschnitt 15 kann beim Anziehen der Mutter der plastische Werkstoff gegen die Gewindeflanken gleiten und eine bessere Dichtung zwischen Bolzen und Mutter vermitteln.

## Patentansprüche

1. Schraubelement mit einer Gewindebohrung (4) und mit einem Sicherungs- und Dichtring (6) aus Kunststoff, der aus einem in eine zur Gewindebohrung konzentrische Ausnehmung (5) in einer Anschraubfläche (2) des Schraubelementes eingesetzten und in der Ausnehmung (5) befestigten kreisringförmigen Teil und einem aus der Ausnehmung herausragenden, im Querschnitt kegelstumpfförmigen Teil (8) besteht, dadurch **gekennzeichnet,** daß neben der Ausnehmung (5) ein erhabener ringförmiger Ansatz (7) an der Anschraubfläche (2) angeformt ist, der durch einen Fügevorgang in einen Ringraum (9) verdrängbar ist, der von der äußeren Begrenzungswand der Ausnehmung (5) und dem im Querschnitt kegelstumpfförmigen Teil (8) des Sicherungs- und Dichtringes (6) gebildet ist.

2. Schraubelement nach Anspruch 1, dadurch **gekennzeichnet,** daß der Sicherungs- und Dichtring (6) in Umfangsabständen durch Einsenkungen (12) im Bereich des in den Ringraum (9) verdrängten Materials drehfest verankert ist.

3. Schraubelement nach Anspruch 2, dadurch **gekennzeichnet,** daß die Einsenkung (12) radiale Nuten zur Aufnahme von überschüssigem, beim Aufschrauben ausweichendem Kunststoff bilden.

4. Schraubelement nach einem der Ansprüche 1 bis 3, dadurch **gekennzeichnet,** daß die Ausnehmung (5) als äußere Begrenzungswand eine zylindrische Mantelfläche (14) und ferner einen Boden aufweist, der angrenzend an die Gewindebohrung (4) einen konischen Abschnitt (15) hat.

5. Verfahren zum Verbinden des Sicherungs- und Dichtringes mit dem Schraubelement nach einem der Ansprüche 1 bis 4, dadurch **gekennzeichnet,** daß durch Druck in axialer Richtung auf die Anschraubfläche (2) des Schraubelementes der ringförmige Ansatz (7) in den Ringspalt (9) verdrängt wird.

## Claims

1. A screw element including a threaded bore (4) and a securing and sealing ring (6) made of plastic material, said ring comprising a circular portion which is inserted in a recess (5) provided in the screwing-on surface (2) of the screw element, which recess is concentric with respect to the threaded bore, and which is fixed to the recess (5) and comprising a portion (8) defining a truncated cone in cross section and protruding from said recess, characterized in that a raised annular projection (7) is formed on said screwing-on surface (2) adjacent the recess (5) which projection is displaceable by a joining operation into an annular space (9) which is defined by the outer peripheral wall of the recess (5) and the truncated cone portion (8) of the securing and sealing ring (6).

2. The screw element of claim 1 characterized in that the securing and sealing ring (6) is anchored against rotation by indentations (12) provided in peripheral distances in the area of the material displaced into the annular space (9).

3. The screw element of claim 2 characterized in that the indentations (12) define radial grooves for receiving excess plastic material displaced by tightening the screw element.

4. The screw element of one of claims 1 to 3 characterized in that the recess (5) comprises a cylindrical surface (14) as outer peripheral wall and a bottom including a conical portion (15) adjacent the threaded bore (4).

5. A method for joining the securing and sealing ring to the screw element according to one of claims 1 to 4 characterized in that the annular projection (7) is displaced into the annular space (9) by exerting a pressure in an axial direction on the screwing-on surface (2) of the screw element.

## Revendications

1. Elément à vis comportant un alésage fileté (4) et un anneau de sécurité et d'étanchéité (6) en matière plastique qui se compose d'une pièce circulaire insérée dans un évidement (5), concentrique à l'alésage fileté (4), ménagé dans une surface de serrage par vissage (2) de l'élément à vis et fixé dans cet évidement (5), une partie (8) à section tronconique faisant saillie hors de l'évidement, caractérisé en ce qu'un appendice annulaire surélevé (7) est conformé sur la surface de serrage par vissage (2) près de l'évidement (5), cet appendice pouvant être repoussé par un processus d'adaptation dans un espace annulaire (9) qui est formé par la paroi extérieure limite de l'évidement (5) et par la partie (8) à section tronconique de l'anneau de sécurité et d'étanchéité (6).

2. Elément à vis selon la revendication 1, caractérisé en ce que l'anneau de sécurité et d'étanchéité est ancré, de façon à empêcher sa rotation, en des points espacés sur sa périphérie au moyen d'enfoncements (12) ménagés dans la zone de la matière repoussée dans l'espace annulaire (9).

3. Elément à vis selon la revendication 2, caractérisé ce que les enfoncements (12) constituent des encoches radiales pour recevoir de la matière plastique en excès, qui se déforme lors du serrage par vissage.

4. Elément à vis selon l'une des revendications 1 à 3, caractérisé en ce que l'évidement (5) présente, comme paroi limite extérieure, une surface périphérique cylindrique (14), ainsi qu'un fond qui comporte une partie conique (15) adjacente à l'évidement fileté (4).

5. Procédé de liaison de l'anneau de sécurité et d'étanchéité à l'élément à vis selon l'une des revendications 1 à 4, caractérisé en ce que l'appendice annulaire (7) est repoussé dans la fente annulaire (9) par une pression en direction axiale sur la surface de serrage par vissage (2) de l'élément à vis.

FIG. 1

FIG. 2

FIG. 3

Fig. 4